# EUROPEAN PATENT APPLICATION

(11) **EP 4 701 112 A1**
(43) Date of publication of application: **25.02.2026**
(21) Application number: 23933346.1
(22) Date of filing: 17.04.2023
(51) Int. Cl.: H04L 5/00, H04W 72/044

(54) **COMMUNICATION PARAMETER DETERMINATION METHOD AND APPARATUS, AND DEVICE AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2023/088793
(87) International publication number: WO 2024/216466

(57) **Abstract**

The present disclosure relates to a communication parameter determination method and apparatus, and a device and a storage medium. The method comprises: receiving first information; and determining, on the basis of the first information, a first number of first beam number combinations and at least one first parameter combination corresponding to the first number of first beam number combinations, wherein the at least one first parameter combination comprises a frequency domain vector parameter *P*ᵥ and a non-zero coefficient parameter β. By means of receiving first information, a first number of first beam number combinations and at least one first parameter combination corresponding thereto are determined. Therefore, a terminal performs CSI reporting on the basis of the determined first beam number combinations and the corresponding first parameter combination thereof, thereby reducing signaling overheads and improving CJT performance.

## Description

### TECHNICAL FIELD

The present disclosure relates to the field of communication technologies, and particularly to a method, an apparatus, and a device for determining communication parameters, and a storage medium.

### BACKGROUND

**In** related technologies, a network device may provide a service for a terminal based on a plurality of transmission and reception points (TRPs). In some cases, the network device may configure a channel measurement resource (CMR), in which the CMR may include a plurality of channel state information reference signal (CSI-RS) resources, and the CSI-RS resources may correspond to the TRPs.

### SUMMARY

To overcome problems existing in the related technologies, the disclosure provides a method, an apparatus, a device for determining communication parameters, and a storage medium.

According to a first aspect of the embodiments of the present disclosure, a method for determining communication parameters is provided. The method is performed by a user equipment (UE), and includes: receiving first information; and determining, based on the first information, a first number of first beam number combinations and at least one first parameter combination corresponding to the first number of first beam number combinations, in which the first parameter combination includes a frequency domain vector parameter *P*ᵥ and a non-zero coefficient parameter β.

In some embodiments, the first information includes a first link identifier, wherein the first link identifier has a first corresponding relationship with the first number of first beam number combinations and/or the at least one first parameter combination, and the first corresponding relationship includes at least one of: the first link identifier corresponding to one first beam number combination; the first link identifier corresponding to more than one first beam number combination; or the first link identifier corresponding to one first parameter combination.

In some embodiments, the first information includes a first beam number combination identifier and a first parameter combination identifier.

In some embodiments, a value of the first number may include at least one of the following: 1; 2; or 4.

In some embodiments, the method further includes: determining a second number of second beam number combinations and at least one second parameter combination corresponding to the second number of second beam number combinations, in which a second beam number combination is a subset of a first beam number combination and the second parameter combination includes the *P*ᵥ and the β.

In some embodiments, the method further includes: receiving second information; and determining, based on the second information, the at least one second parameter combination corresponding to the second number of second beam number combinations.

In some embodiments, the second information includes a second link identifier, in which the second link identifier has a second corresponding relationship with the second number of second beam number combinations and/or the at least one second parameter combination, and the second corresponding relationship includes at least one of: the second link identifier corresponding to one second beam number combination; the second link identifier corresponding to more than one second beam number combination; or the second link identifier corresponding to one second parameter combination.

In some embodiments, the second information includes a second beam number combination identifier and a second parameter combination identifier.

In some embodiments, the second parameter combination is the same as the first parameter combination.

According to a second aspect of the embodiments of the present disclosure, a method for determining communication parameters is provided. The method is performed by a network device, and includes: sending first information, in which the first information is used to instruct a user equipment (UE) to determine a first number of first beam number combinations and at least one first parameter combination corresponding to the first number of first beam number combinations, in which the first parameter combination includes a frequency domain vector parameter *P*ᵥ and a non-zero coefficient parameter β.

In some embodiments, the first information includes a first link identifier, in which the first link identifier has a first corresponding relationship with the first number of first beam number combinations and/or the at least one first parameter combination, and the first corresponding relationship includes at least one of: the first link identifier corresponding to one first beam number combination; the first link identifier corresponding to more than one first beam number combination; or the first link identifier corresponding to one first parameter combination.

In some embodiments, the first information includes a first beam number combination identifier and a first parameter combination identifier.

In some embodiments, a value of the first number may include at least one of the following: 1; 2; or 4.

In some embodiments, the method further includes: sending second information, in which second information is used to instruct the UE to determine at least one second parameter combination corresponding to a second number of second beam number combinations, in which a second beam number combination is a subset of a first beam number combination and the second parameter combination comprises the *P*ᵥ and the β.

In some embodiments, the second information includes a second link identifier, in which the second link identifier has a second corresponding relationship with the second number of second beam number combinations and/or the at least one second parameter combination, and the second corresponding relationship includes at least one of: the second link identifier corresponding to one second beam number combination; the second link identifier corresponding to more than one second beam number combination; or the second link identifier corresponding to one second parameter combination.

In some embodiments, the second information includes a second beam number combination identifier and a second parameter combination identifier.

In some embodiments, the second parameter combination is the same as the first parameter combination.

According to a third aspect of the embodiments of the present disclosure, an apparatus for determining communication parameters is provided. The apparatus includes: a receiving module, configured to receive first information; and a processing module, configured to determine, based on the first information, a first number of first beam number combinations and at least one first parameter combination corresponding to the first number of first beam number combinations, in which the first parameter combination includes a frequency domain vector parameter *P*ᵥ and a non-zero coefficient parameter β.

In some embodiments, the first information includes a first link identifier, wherein the first link identifier has a first corresponding relationship with the first number of first beam number combinations and/or the at least one first parameter combination, and the first corresponding relationship includes at least one of: the first link identifier corresponding to one first beam number combination; the first link identifier corresponding to more than one first beam number combination; or the first link identifier corresponding to one first parameter combination.

In some embodiments, the first information includes a first beam number combination identifier and a first parameter combination identifier.

In some embodiments, a value of the first number may include at least one of the following: 1; 2; or 4.

In some embodiments, the apparatus further includes: a processing module, configured to determine a second number of second beam number combinations and at least one second parameter combination corresponding to the second number of second beam number combinations, in which a second beam number combination is a subset of a first beam number combination and the second parameter combination includes the *P*ᵥ and the β.

In some embodiments, the receiving module is further configured to receive second information; and the processing module is further configured to determine, based on the second information, the at least one second parameter combination corresponding to the second number of second beam number combinations.

In some embodiments, the second information includes a second link identifier, in which the second link identifier has a second corresponding relationship with the second number of second beam number combinations and/or the at least one second parameter combination, and the second corresponding relationship includes at least one of: the second link identifier corresponding to one second beam number combination; the second link identifier corresponding to more than one second beam number combination; or the second link identifier corresponding to one second parameter combination.

In some embodiments, the second information includes a second beam number combination identifier and a second parameter combination identifier.

In some embodiments, the second parameter combination is the same as the first parameter combination.

According to a fourth aspect of the embodiments of the present disclosure, an apparatus for determining communication parameters is provided. The apparatus includes: a sending module, configured to send first information, in which the first information is used to instruct a user equipment (UE) to determine a first number of first beam number combinations and at least one first parameter combination corresponding to the first number of first beam number combinations, in which the first parameter combination includes a frequency domain vector parameter *P*ᵥ and a non-zero coefficient parameter β.

In some embodiments, the first information includes a first link identifier, in which the first link identifier has a first corresponding relationship with the first number of first beam number combinations and/or the at least one first parameter combination, and the first corresponding relationship includes at least one of: the first link identifier corresponding to one first beam number combination; the first link identifier corresponding to more than one first beam number combination; or the first link identifier corresponding to one first parameter combination.

In some embodiments, the first information includes a first beam number combination identifier and a first parameter combination identifier.

In some embodiments, a value of the first number may include at least one of the following: 1; 2; or 4.

In some embodiments, the sending module is further configured to: send second information, in which second information is used to instruct the UE to determine at least one second parameter combination corresponding to a second number of second beam number combinations, in which a second beam number combination is a subset of a first beam number combination and the second parameter combination comprises the *P*ᵥ and the β.

In some embodiments, the second information includes a second link identifier, in which the second link identifier has a second corresponding relationship with the second number of second beam number combinations and/or the at least one second parameter combination, and the second corresponding relationship includes at least one of: the second link identifier corresponding to one second beam number combination; the second link identifier corresponding to more than one second beam number combination; or the second link identifier corresponding to one second parameter combination.

In some embodiments, the second information includes a second beam number combination identifier and a second parameter combination identifier.

In some embodiments, the second parameter combination is the same as the first parameter combination.

According to a fifth aspect of the embodiments of the present disclosure, a device for determining communication parameters is provided. The device includes: a processor; a memory used to store executable instructions of the processor; in which the processor is configured to perform the method as claimed in the first aspect or any one of the implementations within the first aspect.

According to a sixth aspect of the embodiments of the present disclosure, a device for determining communication parameters is provided. The device includes: a processor; a memory used to store executable instructions of the processor; in which the processor is configured to perform the method as claimed in the second aspect or any one of the implementations within the second aspect.

According to a seventh aspect of the embodiments of the present disclosure, a non-transitory computer-readable storage medium is provided, in which when instructions in the storage medium are executed by a processor of a user equipment (UE), the UE performs the method as claimed in the first aspect or any one of the implementations within the first aspect.

According to an eighth aspect of the embodiments of the present disclosure, a non-transitory computer-readable storage medium is provided, in which when instructions in the storage medium are executed by a processor of a network device, the network device performs the method as claimed in the second aspect or any one of the implementations within the second aspect.

The embodiments of the present disclosure provide the following beneficial effects. By receiving first information to determine a first number of first beam number combinations and at least one first parameter combination corresponding to the first number of first beam number combinations, the UE may report channel state information (CSI) based on the determined first beam number combinations and the corresponding first parameter combination, thereby reducing signaling overhead and improving coherent joint transmission (CJT) performance.

It should be understood that the general description provided above and the detailed descriptions in the following text are merely illustrative and explanatory, and do not limit the present disclosure.

### BRIEF DESCRIPTION OF THE DRAWINGS

The accompanying drawings, which are incorporated into and form a part of the description, show embodiments consistent with the disclosure, and serve to explain principles of the disclosure together with the description.
FIG. 1 is a schematic diagram of a wireless communication system according to an embodiment.
FIG. 2 is a flowchart illustrating a method for determining communication parameters according to an embodiment.
FIG. 3 is a flowchart illustrating a method for determining communication parameters according to an embodiment.
FIG. 4 is a flowchart illustrating a method for determining communication parameters according to an embodiment.
FIG. 5 is a flowchart illustrating a method for determining communication parameters according to an embodiment.
FIG. 6 is a flowchart illustrating a method for determining communication parameters according to an embodiment.
FIG. 7 is a schematic diagram of an apparatus for determining communication parameters according to an embodiment.
FIG. 8 is a schematic diagram of an apparatus for determining communication parameters according to an embodiment.
FIG. 9 is a schematic diagram of a device for determining communication parameters according to an embodiment.
FIG. 10 is a schematic diagram of a device for determining communication parameters according to an embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the present disclosure.

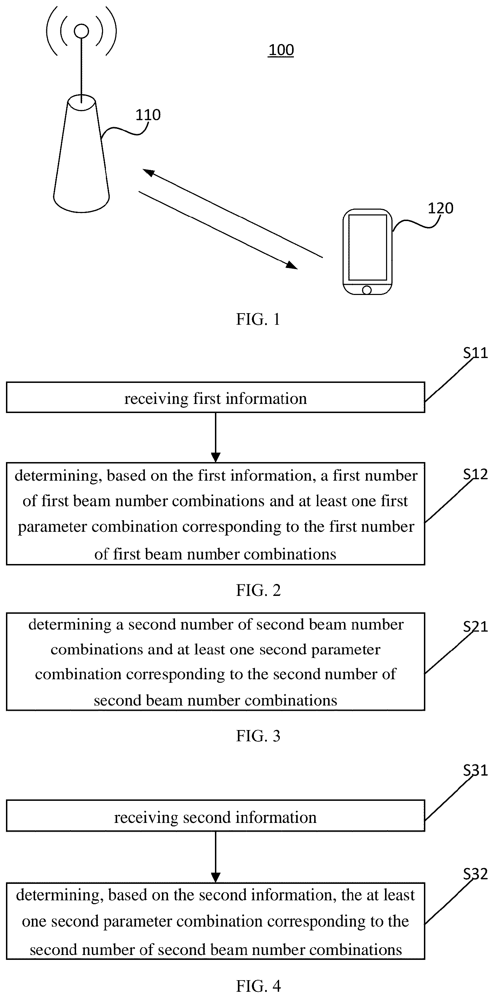

The communication method mentioned in the present disclosure is applicable to a wireless communication system 100 shown in FIG. 1. The network system may include a network device 110 and a terminal 120. It can be understood that the wireless communication system shown in FIG. 1 is only a schematic illustration, and the wireless communication system may also include other network devices, such as a core network device, a wireless relay device and a wireless backhaul device, which are not shown in FIG. 1. The embodiments of the present disclosure do not limit the number of network devices and the number of terminals included in the wireless communication system.

It is further understood that the wireless communication system of the embodiments of the present disclosure is a network that provides a wireless communication function. The wireless communication system may use different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), carrier sense multiple access with collision avoidance. According to capacities, rates, delays or other factors of different networks, the networks may be classified into the 2 generation (2G) network, the 3G network, the 4G network or the future evolution network, such as the 5th generation wireless communication system (5G) network. The 5G network may also be called a New Radio (NR). For convenience of description, the wireless communication network is sometimes referred to simply as network in the present disclosure.

Further, the network device 110 involved in the present disclosure may also be referred as a wireless access network device. The wireless access network device may be: a base station, an evolved Node B (eNB), a home station, an access point (AP) in a wireless fidelity (WIFI) system, a wireless relay node, a wireless backhaul node, a transmission point (TP) or a transmission and receiving point (TRP), etc., or the wireless access network device may also be a gNB in the NR system, or may also be a component or a part of the base station. In a case of vehicle to everything (V2X) communication system, the network device may also be an on-board device. It should be understood that in the embodiments of the present disclosure, the specific technology and the specific device form applied to the network device are not limited.

Further, the terminal 120 involved in the present disclosure may also be referred as a terminal device, a user equipment (UE), a mobile station (MS), a mobile terminal (MT), etc. The terminal is a device that provides voice and/or data connectivity to a user. For example, the terminal may be a handheld device or an on-board etc. with the wireless connectivity function. At present, some examples of the terminal are: a mobile phone, a pocket personal computer (PPC), a palmtop, a personal digital assistant (PDA), a laptop, a tablet, a wearable device, or an on-board device, etc. In addition, in a case of the V2X communication system, the terminal may also be an on-board device. It should be understood that in the embodiments of the present disclosure, the specific technology and the specific device form applied to the terminal are not limited.

In the embodiments of the present disclosure, the network device 110 and the terminal 120 may use any feasible wireless communication technology to realize data transmission therebetween. A transmission channel through which the network device 110 sends data to the terminal 120 is called a downlink (DL) channel, and a transmission channel through which the terminal 120 sends data to the network device 110 is called an uplink (UL) channel. It is understood that the network device involved in the embodiments of the present disclosure may be a base station. Of course, the network device may also be any other possible network device, the terminal may be any possible terminal, which are not limited in the present disclosure.

In some cases, the network device may use four TRPs to provide a service to the terminal. In some cases, the network device may configure a channel measurement resource (CMR) including K CSI-RS resources, that is, the network device indicates K TRPs, in which K is a positive integer. At the same time, the network device also needs to configure the number of beams that need to be selected for each CSI-RS resource (that is, for each TRP). It is clear that the beam may be referred to as space domain basis (SD basis). That is, based on radio resource control (RRC) signaling of the network device, a plurality of beam combinations may be configured, and each beam combination includes the number of beams corresponding to each CSI-RS resource.

It should be understood that the beam in the present disclosure may be equivalently replaced with the SD basis.

In some embodiments, terms "up-link", "uplink ", "physical uplink", etc. may be used interchangeably; terms "down-link", "downlink ", "physical downlink ", etc. may be used interchangeably; and terms "side ", "sidelink", "side communication", "sidelink communication", "direct connection", "direct connection link", "direct connection communication", "direct connection link communication" may also be used interchangeably.

In some embodiments, terms "downlink control information (DCI)", "downlink (DL) assignment", "DL DCI", "uplink (UL) grant", and "UL DCI", etc. may be used interchangeably.

The above-mentioned SD basis is related to the number of ports of the CSI-RS resource, such as N1, N2, O1 and O2. N1 represents the number of ports in a first dimension; N2 represents the number of ports in a second dimension; O1 represents the oversampling number (or oversampling rate) in the first dimension; O2 represents the oversampling number (or oversampling rate) in the second dimension. The first dimension may be, for example, the horizontal dimension, and the second dimension may be, for example, the vertical dimension.

In the embodiments of the present disclosure, some beam combination methods are provided in the following, as shown in Table 1.

**Table 1**

| *N*_{TRP} | {*L*ₙ} combination |
|---|---|
| | {2} |
| 1 | {4} |
| | {6} |
| 2 | {2,2} |
| | {2,4}, {4,2} |
| | {4,4} |
| | {2,2,2} |
| 3 | {2,2,4} {2,4,2} {4,2,2} |
| | {4,4,4} |
| | {2,2,2,2} |
| 4 | {2,2,2,4} |
| | {2,2,4,4} |
| | {4,4,4,4 } |

*N*_{TRP} represents the number of TRPs, and it may also be expressed as the number of CSI-RS resources included in one CMR. *L*ₙ^{,} represents the number of beams corresponding to each TRP or CSI-RS resource.

As can be seen from Table 1, the number of beam combinations that the UE can maintain simultaneously may be 1, 2 or 4. That is, the UE needs to select one beam combination from 1, 2 or 4 beam combinations and report the selected beam combination to the network device. Of course, it can be understood that in some embodiments, when the number of the beam combinations is 1, the UE may not need to report.

It is understood that each element in Table 1 exists independently. These elements are exemplarily listed in the same table, but this does not mean that all the elements in the table must coexist as shown in the table. The value of each element is not dependent on the value of any other element in Table 1. Therefore, those skilled in the art can understand that the value of each element in Table 1 is an independent embodiment.

Also, a number parameter of frequency domain basis (FD basis) may be denoted as *P*ᵥ, and a non-zero coefficient parameter may be denoted as β. For an SD basis number combination and a combination of *P*ᵥ and β, reference may be made to Table 2.

**Table 2**

| *N*_{TRP} | SD basis number combination | FD basis combination {*P*ᵥ}, β | | | | | |
|---|---|---|---|---|---|---|---|
| | | {1/8, 1/8, 1/16, 1/16}, ¼ | {1/8, 1/8, 1/16, 1/16}, ½ | {1/4, 1/4, 1/8, 1/8}, ¼ | {1/4, 1/4, 1/8, 1/8}, ½ | {1/4, 1/4, 1/4, 1/4}, ¾ | {1/2, 1/2, 1/2, 1/2}, ½ |
| 1 | 2 | | | | | | |
| | 4 | | | | | | |
| | 6w/ restriction | | | | | | |
| 2 | {2,2} | | | | | | |
| | {2,4} | | | | | | |
| | {4,2} | | | | | | |
| | {4,4} | | | | | | |
| 3 | {2,2,2} | | | | | | |
| | {2,2,4} | | | | | | |
| | {2,4,2} | | | | | | |
| | {4,2,2} | | | | | | |
| | {4,4,4} | | | | | | |
| 4 | {2,2,2,2} | | | | | | N/A |
| | {2,2,2,4} | | | | | | N/A |
| | {2,2,4,4} | | | | | | N/A |
| | {4,4,4,4} | | | | | | N/A |

Here, "w/ restriction" indicates that the maximum support rank is 2. "N/A" may be interpreted as not applicable. It can be seen from Table 2 that if both the SD basis number combination and the combination of *P*ᵥ and β are empty, it indicates that no conclusion has been reached yet. Further, in the combination of *P*ᵥ in Table 2, there are 4 *P*ᵥ. This means that the maximum rank is 4. In a case that the rank is 4, there are 4 layers, and each layer corresponds to one *P*ᵥ. The *P*ᵥ on a layer is used to determine the number of frequency domain bases (i.e., basis vectors) that needs to be selected on the corresponding layer. The number of the frequency domain bases that needs to be selected may be determined by multiplying the total number of frequency domain bases by *P*ᵥ.

It is understood that each element in Table 2 exists independently. These elements are exemplarily listed in the same table, but this does not mean that all the elements in the table must coexist as shown in the table. The value of each element is not dependent on the value of any other element in Table 2. Therefore, those skilled in the art can understand that the value of each element in Table 2 is an independent embodiment.

However, in some cases, a parameter combination identifier may correspond to one SD basis number combination, one *P*ᵥ, and one β. Therefore, the network device only needs to configure one parameter combination identifier.

However, in a case that the number of TRPs is fixed, the SD basis number combination configured by the network device may be 1, 2, or 4. And for each combination, whether its corresponding *P*ᵥ and β are configured independently or are configured equally is uncertain. Moreover, in a case that the number of TRPs is 3, the network device may configure the SD basis number combination such as {4, 4, 4}. The network device configures corresponding *P*ᵥ and β for {4, 4, 4}. Since the UE may choose 2 TRPs or 1 TRP out of the 3 TRPs to provide services for the UE, then in this case, whether the network device needs to additionally configure the corresponding *P*ᵥ and β for SD basis number combination of {4,4} or {4} is still not yet determined.

Therefore, the present disclosure provides a method, an apparatus, a device for determining communication parameters, and a storage medium. By receiving first information to determine a first number of first beam number combinations and at least one corresponding first parameter combination, the UE may report channel state information (CSI) based on the determined first beam number combinations and the corresponding first parameter combination, thereby reducing signaling overhead and improving coherent joint transmission (CJT) performance.

FIG. 2 is a flowchart illustrating a method for determining communication parameters according to an embodiment. As shown in FIG. 2, the method is performed by a user equipment (UE), and may include the following steps.

In step S11, first information is received.

In some embodiments, the UE may receive the first information.

For example, the UE may receive the first information sent by a network device, in which the first information may indicate a first number of first beam number combinations. For example, the first information indicates a first number of space domain basis (SD basis) number combinations.

For example, the UE receives the first information sent by a network device, in which the first information may indicate at least one first parameter combination corresponding to the first number of beam number combinations. The first parameter combination includes *P*ᵥ and β.

For example, the UE receives the first information sent by a network device, in which the first information may indicate a first number of first beam number combinations, and the first information may also indicate at least one first parameter combination corresponding to the first number of beam number combinations.

For example, in a case that the number of TRPs is 2, if the first number is 1, then the first number of the first beam number combinations may be {2, 2}, {2, 4}, {4, 2} or {4, 4}. If the first number is 2, then the first number of the first beam number combinations may be any two of {2, 2}, {2, 4}, {4, 2} or {4, 4}. If the first number is 4, then the first number of the first beam number combinations may be {2, 2}, {2, 4}, {4, 2} and {4, 4}. It is clear that one or more digits in each beam number combination represent one or more numbers of beams in the beam number combination. Each beam number may be understood as the number of beams that a corresponding CSI-RS resource (or a TRP) needs to select.

It is clear that the larger the *P*ᵥ is, the more frequency domain bases need to be selected. The larger the β is, the more non-zero coefficient parameters there are.

In step S12, based on the first information, a first number of first beam number combinations and at least one first parameter combination corresponding to the first number of first beam number combinations are determined.

In some embodiments, the UE may determine, based on the first information received in S12, the first number of the first beam number combinations and the at least one first parameter combination corresponding to the first number of the first beam number combinations.

For example, the first information may include a parameter used to indicate the first number of the first beam number combinations. The UE may determine the first number of the first beam number combinations based on the parameter.

For example, the first information may include a parameter used to indicate the at least one first parameter combination corresponding to the first number of the first beam number combinations. The UE may determine the at least one first parameter combination corresponding to the first number of the first beam number combinations based on the parameter.

For example, the first information may include a parameter used to indicate the first number of the first beam number combinations, and a parameter used to indicate the at least one first parameter combination corresponding to the first number of the first beam number combinations. The UE may determine, based on the aforementioned multiple parameters, the first number of the first beam number combinations and the at least one first parameter combination corresponding to the first number of the first beam number combinations.

It is understandable that, in the present disclosure, based on the first information, the first beam number combinations and the corresponding at least one first parameter combination are determined, which avoids the situation where the UE, when determining the first beam number combinations, is unclear about which values of *P*ᵥ and β are used for the corresponding first parameter combination, and thus avoids configuring the at least one first parameter combination corresponding to one or more first beam number combinations through additional signaling between the network device and the UE. Consequently, the additional signaling overhead may be reduced.

In the present disclosure, by receiving first information to determine a first number of first beam number combinations and at least one corresponding first parameter combination, the UE may report channel state information (CSI) based on the determined first beam number combinations and the corresponding first parameter combination, thereby reducing signaling overhead and improving coherent joint transmission (CJT) performance.

In the method for determining communication parameters provided in the embodiments of the present disclosure, the first information includes a first link identifier, in which the first link identifier has a first corresponding relationship with the first beam number combination(s) and/or the first parameter combination(s), and the first corresponding relationship includes at least one of: the first link identifier corresponding to one first beam number combination; the first link identifier corresponding to more than one first beam number combination; or the first link identifier corresponding to one first parameter combination.

In some embodiments, the first information may include the first link identifier, in which the first link identifier has the first corresponding relationship with the first beam number combination(s).

For example, the first information received by the UE includes the first link identifier. The first link identifier has the first corresponding relationship with the first beam number combination(s). The UE may determine the first beam number combination(s) based on the first link identifier, such as determining the first number of first beam number combinations.

In some embodiments, the first information may include the first link identifier, in which the first link identifier has the first corresponding relationship with the first parameter combination(s).

For example, the first information received by the UE includes the first link identifier. The first link identifier has the first corresponding relationship with the first parameter combination(s). The UE may determine the first parameter combination(s) based on the first link identifier, such as determining the at least one first parameter combination corresponding to the first number of the first beam number combinations.

In some embodiments, the first information may include the first link identifier, in which the first link identifier has the first corresponding relationship with the first beam number combination(s) and the first parameter combination(s).

For example, the first information received by the UE includes the first link identifier. The first link identifier has the first corresponding relationship with the first beam number combination(s) and the first parameter combination(s). The UE may determine, based on the first link identifier, the first beam number combination(s) or the first parameter combination(s), such as determining the first number of first beam number combinations, and the at least one first parameter combination corresponding to the first number of the first beam number combinations.

In some embodiments, the first corresponding relationship includes the first link identifier corresponding to one first beam number combination.

For example, a first link identifier 1 corresponds to a first beam number combination 1: {2, 2, 2}, and a first link identifier 2 corresponds to a first beam number combination 2: {4, 4, 4}. In a case that the first information includes the first link identifier 1, the UE may determine the first beam number combination 1: {2, 2, 2}; or in a case that the first information includes the first link identifier 2, the UE may determine the first beam number combination 2: {4, 4, 4}.

In some embodiments, the first corresponding relationship includes the first link identifier corresponding to more than one first beam number combination.

For example, a first link identifier 1 corresponds to a first beam number combination 1: {2, 2, 2}, and a first beam number combination 2: {4, 4, 4}. In a case that the first information includes the first link identifier 1, the UE may determine the first beam number combination 1: {2, 2, 2}, and the first beam number combination 2: {4, 4, 4}.

In some embodiments, the first corresponding relationship includes the first link identifier corresponding to one first parameter combination.

For example, a first link identifier 1 corresponds to a first parameter combination 1: {{1/4, 1/4, 1/8, 1/8}, ½}, and a first link identifier 2 corresponds to a first parameter combination 2: { { 1/4, 1/4, 1/8, 1/8}, ¼}. In a case that the first information includes the first link identifier 1, the UE may determine the first parameter combination 1: {{1/4, 1/4, 1/8, 1/8}, ½}; or in a case that the first information includes the first link identifier 2, the UE may determine the first parameter combination 2: { {1/4, 1/4, 1/8, 1/8}, ¼}.

In some embodiments, the first corresponding relationship includes the first link identifier corresponding to one first beam number combination and the first link identifier corresponding to one first parameter combination. That is, each first beam number combination corresponds to one first parameter combination.

For example, a first link identifier 1 corresponds to a first beam number combination 1: {2, 2, 2} and a first parameter combination 1: {{1/4, 1/4, 1/8, 1/8}, ½}; and a first link identifier 2 corresponds to a first beam number combination 2: {4, 4, 4} and a first parameter combination 2: {{1/4, 1/4, 1/8, 1/8}, ¼}. In a case that the first information includes the first link identifier 1, the UE may determine the first beam number combination 1: {2, 2, 2} and the first parameter combination 1: {{1/4, 1/4, 1/8, 1/8}, ½}; or in a case that the first information includes the first link identifier 2, the UE may determine the first beam number combination 2: {4, 4, 4} and the first parameter combination 2: {{1/4, 1/4, 1/8, 1/8}, ¼}.

In some embodiments, the first corresponding relationship includes the first link identifier corresponding to more than one first beam number combination and the first link identifier corresponding to one first parameter combination. That is, more than one first beam number combination corresponds to one first parameter combination.

For example, a first link identifier 1 corresponds to a first beam number combination 1: {2, 2, 2}, a first beam number combination 2: {4, 4, 4}, and a first parameter combination 1: {{1/4, 1/4, 1/8, 1/8}, ½}; and a first link identifier 2 corresponds to a first beam number combination 3: {2, 4, 2}, a first beam number combination 4: {2, 2, 4}, and a first parameter combination 2: {{1/4, 1/4, 1/8, 1/8}, ¼}. In a case that the first information includes the first link identifier 1, the UE may determine the first beam number combination 1: {2, 2, 2}, the first beam number combination 2: {4, 4, 4}, and the first parameter combination 1: {{1/4, 1/4, 1/8, 1/8}, ½}; or in a case that the first information includes the first link identifier 2, the UE may determine the first beam number combination 3: {2, 4, 2}, the first beam number combination 4: {2, 2, 4}, and the first parameter combination 2: { { 1/4, 1/4, 1/8, 1/8}, 1,4}.

It is clear that the first beam number combination and the first parameter combination may establish a corresponding relationship via a link identifier. In this case, only the first link identifier needs to be carried in the first information, and the UE may determine, based on the first link identifier, the first beam number combination(s) and the first parameter combination(s).

In some embodiments, an identifier may be an identity (ID) or an index.

In the present disclosure, by determining, based on a link identifier, a first number of first beam number combinations and at least one corresponding first parameter combination, the UE may report channel state information (CSI) based on the determined first beam number combinations and the corresponding first parameter combination, thereby reducing signaling overhead and improving coherent joint transmission (CJT) performance.

In the method for determining communication parameters provided in the embodiments of the present disclosure, the first information includes a first beam number combination identifier and a first parameter combination identifier.

In some embodiments, the first information may include the first beam number combination identifier and the first parameter combination identifier.

For example, the first information includes at least one first beam number combination identifier and at least one first parameter combination identifier. A first parameter combination indicated by the first parameter combination identifier corresponds to a first beam number combination indicated by the first beam number combination identifier.

The UE may determine the first beam number combination based on the first beam number combination identifier, and determine the first parameter combination based on the first parameter combination identifier.

In this case, it is not necessary to establish a link between the first beam number combination and the first parameter combination. The UE may separately determine the first beam number combination based on the first beam number combination identifier and determine the first parameter combination based on the first parameter combination identifier.

For example, the first information may include one first beam number combination identifier and one first parameter combination identifier. The UE may determine, based on the one first beam number combination identifier included in the first information, a first beam number combination indicated by the first beam number combination identifier; and the UE may determine, based on the one first parameter combination identifier included in the first information, a first parameter combination indicated by the first parameter combination identifier.

For example, the first information may include more than one first beam number combination identifier and one first parameter combination identifier. For example, the first information may include a first beam number combination identifier 1, a first beam number combination identifier 2, and a first parameter combination identifier 1. The UE may determine a first beam number combination 1 based on the first beam number combination identifier 1 included in the first information, the UE may determine a first beam number combination 2 based on the first beam number combination identifier 2 included in the first information, and the UE may determine a first parameter combination 1 based on the first parameter combination identifier 1 included in the first information. The first beam number combination 1 corresponds to the first parameter combination 1, and the first beam number combination 2 corresponds to the first parameter combination 1.

For example, the first information may include more than one first beam number combination identifier and more than one first parameter combination identifier. For example, the first information may include a first beam number combination identifier 1, a first beam number combination identifier 2, a first parameter combination identifier 1, and a first parameter combination identifier 2. The UE may determine a first beam number combination 1 based on the first beam number combination identifier 1 included in the first information, the UE may determine a first beam number combination 2 based on the first beam number combination identifier 2 included in the first information, the UE may determine a first parameter combination 1 based on the first parameter combination identifier 1 included in the first information, and the UE may determine a first parameter combination 2 based on the first parameter combination identifier 2 included in the first information. The first beam number combination 1 corresponds to the first parameter combination 1, and the first beam number combination 2 corresponds to the first parameter combination 2.

In the present disclosure, by determining, based on the first beam number combination identifier and the first parameter combination identifier respectively, a first number of first beam number combinations and at least one corresponding first parameter combination, the UE may report channel state information (CSI) based on the determined first beam number combinations and the corresponding first parameter combination, thereby reducing signaling overhead and improving coherent joint transmission (CJT) performance.

In the method for determining communication parameters provided in the embodiments of the present disclosure, a value of the first number may include at least one of the following: 1; 2; or 4.

In some embodiments, the first number may be 1.

For example, the UE determines one first SD basis number combination based on the first information.

In some embodiments, the first number may be 2.

For example, the UE determines two first SD basis number combinations based on the first information.

In some embodiments, the first number may be 4.

For example, the UE determines four first SD basis number combinations based on the first information.

It is clear that the first number may represent the number of the SD basis number combinations that the UE is capable of supporting to maintain simultaneously.

The present disclosure provides multiple possible cases of the first number, so as to, by receiving first information, determine a first number of first beam number combinations and at least one corresponding first parameter combination, which enables the UE to report channel state information (CSI) based on the determined first beam number combinations and the corresponding first parameter combination, thereby reducing signaling overhead and improving coherent joint transmission (CJT) performance.

In the method for determining communication parameters provided in the embodiments of the present disclosure, FIG. 3 is a flowchart illustrating a method for determining communication parameters according to an embodiment. As shown in FIG. 3, the method may also include the following steps.

In step S21, a second number of second beam number combinations and at least one second parameter combination corresponding to the second number of second beam number combinations are determined.

In some embodiments, the UE may determine the second number of second beam number combinations and the at least one second parameter combination corresponding to the second number of second beam number combinations. A second beam number combination is a subset of a first beam number combination, and the second parameter combination includes *P*ᵥ and β.

For example, the UE may determine the second number of second beam number combinations. The second beam number combination is a subset of the first beam number combination. For example, if the first beam number combination is {2, 4, 2}, then the second beam number combination may be {4, 2}, {2, 4}, {2, 2}, {4} and/or {2}.

For example, the UE may determine the at least one second parameter combination corresponding to the second number of second beam number combinations. For example, more than one combination of *P*ᵥ and β corresponding to more than one second beam number combination respectively is determined; or one combination of *P*ᵥ and β corresponding to more than one second beam number combination is determined, that is more than one second beam number combination corresponding to the same *P*ᵥ and the same β.

It is clear that the first beam number combination may be a beam number combination corresponding to N TRPs, and the second beam number combination may be a beam number combination corresponding to TRPs selected either partially or completely by the UE from the N TRPs. It is possible that the UE does not select some of the TRPs. That is to say, the beam number in the first beam number combination is N, and N represents the number of non-zero power (NZP) CSI-RS resources included in one CMR configured by the network device, or N may be understood as the number of TRPs. While the beam number in the second beam number combination may be M, where M is less than or equal to N.

For example, in a case that N is 3, taking Table 1 as an example, the first beam number combination that the network device may configure by the first information may be {2, 4, 2}. The network device may also configure *P*ᵥ and β corresponding to {2, 4, 2} by the first information. For the UE, it may choose 2 TRPs or 1 TRP out of 3 TRPs to provide a service for the UE. In this case, the second beam number combination may be {4, 2}, {2, 4}, {2, 2}, {4}, and/or {2}. It can be seen that the first beam number combination may correspond to more than one second beam number combination.

In some embodiments, when the UE determines the second number of second beam number combinations and the at least one second parameter combination corresponding to the second number of second beam number combinations, the UE may determine them based on information, sent by the network device, used to configure the second number of the second beam number combinations and the at least one second parameter combination corresponding to the second number of the second beam number combinations, or based on the first number of the first beam number combinations and the at least one first parameter combination corresponding to the first number of the first beam number combinations. The present disclosure does not make any limitations.

For example, the UE receives information used to configure the second number of the second beam number combinations and the at least one second parameter combination corresponding to the second number of the second beam number combinations. The UE determines, based on the information, the second number of the second beam number combinations and the at least one second parameter combination corresponding to the second number of the second beam number combinations.

For example, the UE determines the second number of the second beam number combinations based on a TRP selected by itself and the first number of the first beam number combinations. The UE may also determine the at least one second parameter combination corresponding to the second beam number combination(s) based on the at least one first parameter combination corresponding to the first beam number combination(s).

Of course, in some cases, the UE may determine the second number of the second beam number combinations based on a TRP selected by itself and the first number of the first beam number combinations, receive information used to configure the at least one second parameter combination corresponding to the second number of the second beam number combinations, and determine the at least one second parameter combination corresponding to the second number of the second beam number combinations based on the information.

In the present disclosure, the second beam number combination belonging to a subset of the first beam number combination and at least one corresponding second parameter combination are determined, so that the UE may report channel state information (CSI) based on the determined second beam number combinations and the corresponding second parameter combination, thereby reducing signaling overhead and improving coherent joint transmission (CJT) performance.

In the method for determining communication parameters provided in the embodiments of the present disclosure, FIG. 4 is a flowchart illustrating a method for determining communication parameters according to an embodiment. As shown in FIG. 4, the method may also include the following steps.

In step S31, second information is received.

In some embodiments, the UE may receive the second information.

For example, the UE receives the second information sent by a network device. The second information may be used to configure at least one second parameter combination corresponding to a second number of second beam number combinations.

The second information may be referred to as second configuration information, second indication information, second parameter combination configuration information, etc. This present disclosure does not limit the name of the second information.

In some embodiments, the second information may be the same as the first information, or may be different from the first information.

For example, the second information and the first information are contained in the same RRC signaling. For example, the second information and the first information are respectively included in different RRC signalings.

In step S32, based on the second information, the at least one second parameter combination corresponding to the second number of second beam number combinations is determined.

In some embodiments, the UE may determine, based on the second information received in S31, the at least one second parameter combination corresponding to the second number of the second beam number combinations.

For example, the UE receives the second information. The second information may include a parameter used to indicate the at least one second parameter combination corresponding to the second number of the second beam number combinations. The UE may determine the at least one second parameter combination corresponding to the second number of the second beam number combinations based on the parameter.

In the present disclosure, the at least one second parameter combination corresponding to the second number of the second beam number combinations is determined, which enables the UE to report channel state information (CSI) based on the determined second beam number combinations and the corresponding second parameter combination, thereby reducing signaling overhead and improving coherent joint transmission (CJT) performance.

In the method for determining communication parameters provided in the embodiments of the present disclosure, the second information includes a second link identifier, in which the second link identifier has a second corresponding relationship with the second beam number combination(s) and/or the second parameter combination(s), and the second corresponding relationship includes at least one of: the second link identifier corresponding to one second beam number combination; the second link identifier corresponding to more than one second beam number combination; or the second link identifier corresponding to one second parameter combination.

In some embodiments, the second information may include the second link identifier, in which the second link identifier has the second corresponding relationship with the second beam number combination(s).

For example, the second information received by the UE includes the second link identifier. The second link identifier has the second corresponding relationship with the second beam number combination(s). The UE may determine the second beam number combination(s) based on the second link identifier, such as determining the second number of second beam number combinations.

In some embodiments, the second information may include the second link identifier, in which the second link identifier has the second corresponding relationship with the second parameter combination(s).

For example, the second information received by the UE includes the second link identifier. The second link identifier has the second corresponding relationship with the second parameter combination(s). The UE may determine the second parameter combination(s) based on the second link identifier, such as determining at least one second parameter combination corresponding to the second number of the second beam number combinations.

In some embodiments, the second information may include the second link identifier, in which the second link identifier has the second corresponding relationship with the second beam number combination(s) and the second parameter combination(s).

For example, the second information received by the UE includes the second link identifier. The second link identifier has the second corresponding relationship with the second beam number combination(s) and the second parameter combination(s). The UE may determine, based on the second link identifier, the second beam number combination(s) and the second parameter combination(s), such as determining the second number of second beam number combinations, and at least one second parameter combination corresponding to the second number of the second beam number combinations.

In some embodiments, the second corresponding relationship includes the second link identifier corresponding to one second beam number combination.

For example, a second link identifier 1 corresponds to a second beam number combination 1: {2, 2}, and a second link identifier 2 corresponds to a second beam number combination 2: {2, 4}. In a case that the second information includes the second link identifier 1, the UE may determine the second beam number combination 1: {2, 2}; or in a case that the second information includes the second link identifier 2, the UE may determine the second beam number combination 2: {2, 4}.

In some embodiments, the second corresponding relationship includes the second link identifier corresponding to more than one second beam number combination.

For example, a second link identifier 1 corresponds to a second beam number combination 1: {2, 2}, and a second beam number combination 2: {2, 4}. In a case that the second information includes the second link identifier 1, the UE may determine the second beam number combination 1: {2, 2}, and the second beam number combination 2: {2, 4}.

In some embodiments, the second corresponding relationship includes the second link identifier corresponding to one second parameter combination.

For example, a second link identifier 1 corresponds to a second parameter combination 1: {{1/4, 1/4, 1/8, 1/8}, ½}, and a second link identifier 2 corresponds to a second parameter combination 2: {{1/4, 1/4, 1/8, 1/8}, ¼}. In a case that the second information includes the second link identifier 1, the UE may determine the second parameter combination 1: {{1/4, 1/4, 1/8, 1/8}, ½}; or in a case that the second information includes the second link identifier 2, the UE may determine the second parameter combination 2: {{1/4, 1/4, 1/8, 1/8}, ¼}.

In some embodiments, the second corresponding relationship includes the second link identifier corresponding to one second beam number combination and the second link identifier corresponding to one second parameter combination. That is, each second beam number combination corresponds to one second parameter combination.

For example, a second link identifier 1 corresponds to a second beam number combination 1: {2, 2} and a second parameter combination 1: {{1/4, 1/4, 1/8, 1/8}, ½}; and a second link identifier 2 corresponds to a second beam number combination 2: {2, 4} and a second parameter combination 2: {{1/4, 1/4, 1/8, 1/8}, ¼}. In a case that the second information includes the second link identifier 1, the UE may determine the second beam number combination 1: {2, 2} and the second parameter combination 1: {{1/4, 1/4, 1/8, 1/8}, ½}; or in a case that the second information includes the second link identifier 2, the UE may determine the second beam number combination 2: {2, 4} and the second parameter combination 2: {{1/4, 1/4, 1/8, 1/8}, ¼}.

In some embodiments, the second corresponding relationship includes the second link identifier corresponding to more than one second beam number combination and the second link identifier corresponding to one second parameter combination. That is, more than one second beam number combination corresponds to one second parameter combination.

For example, a second link identifier 1 corresponds to a second beam number combination 1: {2, 2}, a second beam number combination 2: {2, 4}, and a second parameter combination 1: {{1/4, 1/4, 1/8, 1/8}, ½}; and a second link identifier 2 corresponds to a second beam number combination 3: {2}, a second beam number combination 4: {4}, and a second parameter combination 2: {{1/4, 1/4, 1/8, 1/8}, ¼}. In a case that the second information includes the second link identifier 1, the UE may determine the second beam number combination 1: {2, 2}, the second beam number combination 2: {2, 4}, and the second parameter combination 1: {{1/4, 1/4, 1/8, 1/8}, ½}; or in a case that the second information includes the second link identifier 2, the UE may determine the second beam number combination 3: {2}, the second beam number combination 4: {4}, and the second parameter combination 2: {{1/4, 1/4, 1/8, 1/8}, ¼}.

It is clear that the second beam number combination and the second parameter combination may establish a corresponding relationship via a link identifier. In this case, only the second link identifier needs to be carried in the second information, and the UE may determine, based on the second link identifier, the second beam number combination and the second parameter combination.

In some embodiments, an identifier may be an identity (ID) or an index.

In the present disclosure, by determining, based on a link identifier, a second number of second beam number combinations and at least one corresponding second parameter combination, the UE may report channel state information (CSI) based on the determined second beam number combinations and the corresponding second parameter combination, thereby reducing signaling overhead and improving coherent joint transmission (CJT) performance.

In the method for determining communication parameters provided in the embodiments of the present disclosure, the second information includes a second beam number combination identifier and a second parameter combination identifier; or the second information includes a second parameter combination identifier.

In some embodiments, the second information may include the second parameter combination identifier.

For example, the UE may determine the second parameter combination based on the second parameter combination identifier included in the second information, such as determining one second parameter combination. In this case, it may be considered that the one second parameter combination determined by the UE is used for one or more second beam number combinations. That is, it may be considered that one or more second beam number combinations determined by the UE correspond to the same one second parameter combination, i.e. corresponding to the second parameter combination indicated by the second parameter combination identifier.

In some embodiments, the second information includes a second beam number combination identifier and a second parameter combination identifier.

For example, the second information includes at least one second beam number combination identifier and at least one second parameter combination identifier. A second parameter combination indicated by the second parameter combination identifier corresponds to a second beam number combination indicated by the second beam number combination identifier.

The UE may determine the second beam number combination based on the second beam number combination identifier, and determine the second parameter combination based on the second parameter combination identifier.

In this case, it is not necessary to establish a link between the second beam number combination and the second parameter combination. The UE may separately determine the second beam number combination based on the second beam number combination identifier and determine the second parameter combination based on the second parameter combination identifier.

In the present disclosure, by determining, based on the second beam number combination identifier and the second parameter combination identifier respectively, a second number of second beam number combinations and at least one corresponding second parameter combination, the UE may report channel state information (CSI) based on the determined second beam number combinations and the corresponding second parameter combination, thereby reducing signaling overhead and improving coherent joint transmission (CJT) performance.

In the method for determining communication parameters provided in the embodiments of the present disclosure, the second parameter combination is the same as the first parameter combination.

In some embodiments, the second parameter combination corresponding to the second beam number combination may be the same as the first parameter combination corresponding to the first beam number combination.

For example, *P*ᵥ and β corresponding to the second beam number combination are the same as *P*ᵥ and β corresponding to the first beam number combination. In other words, the UE may take *P*ᵥ and β corresponding to the first beam number combination as *P*ᵥ and β corresponding to the second beam number combination.

The present disclosure provides a manner for determining the second parameter combination, which enables the UE to report channel state information (CSI) based on the determined second beam number combinations and the corresponding second parameter combination, thereby reducing signaling overhead and improving coherent joint transmission (CJT) performance.

Based on the same idea, the present disclosure also provides a method for determining communication parameters performed by a network device.

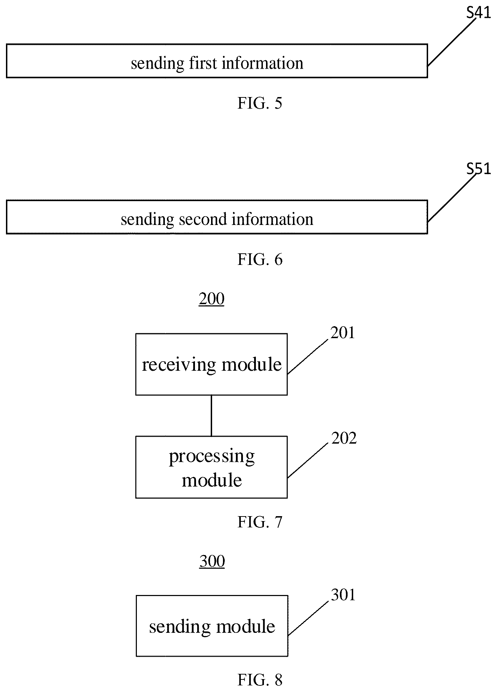

FIG. 5 is a flowchart illustrating a method for determining communication parameters according to an embodiment. As shown in FIG. 5, the method is performed by a network device, and may include the following steps.

In step S41, first information is sent.

In some embodiments, the network device may send the first information.

For example, the network device may send the first information to a user equipment (UE), in which the first information may indicate a first number of first beam number combinations. For example, the first information indicates a first number of space domain basis (SD basis) number combinations.

For example, the network device may send the first information to a user equipment (UE), in which the first information may indicate at least one first parameter combination corresponding to the first number of beam number combinations. The first parameter combination includes *P*ᵥ and β.

For example, the network device may send the first information to a user equipment (UE), in which the first information may indicate a first number of first beam number combinations, and the first information may also indicate at least one first parameter combination corresponding to the first number of beam number combinations.

For example, in a case that the number of TRPs is 2, if the first number is 1, then the first number of the first beam number combinations may be {2, 2}, {2, 4}, {4, 2} or {4, 4}. If the first number is 2, then the first number of the first beam number combinations may be any two of {2, 2}, {2, 4}, {4, 2} or {4, 4}. If the first number is 4, then the first number of the first beam number combinations may be {2, 2}, {2, 4}, {4, 2} and {4, 4}. It is clear that one or more digits in each beam number combination represent one or more numbers of beams in the beam number combination. Each beam number may be understood as the number of beams that a corresponding CSI-RS resource (or a TRP) needs to select.

It is clear that the larger the *P*ᵥ is, the more frequency domain bases need to be selected. The larger the β is, the more non-zero coefficient parameters there are.

It is understandable that, in the present disclosure, based on the first information, the first beam number combinations and the corresponding at least one first parameter combination are determined, which avoids the situation where the UE, when determining the first beam number combinations, is unclear about which values of *P*ᵥ and β are used for the corresponding first parameter combination, and thus avoids configuring the at least one first parameter combination corresponding to one or more first beam number combinations through additional signaling between the network device and the UE. Consequently, the additional signaling overhead may be reduced.

In the present disclosure, by receiving first information to determine a first number of first beam number combinations and at least one corresponding first parameter combination, the UE may report channel state information (CSI) based on the determined first beam number combinations and the corresponding first parameter combination, thereby reducing signaling overhead and improving coherent joint transmission (CJT) performance.

In the method for determining communication parameters provided in the embodiments of the present disclosure, the first information includes a first link identifier, in which the first link identifier has a first corresponding relationship with the first beam number combination(s) and/or the first parameter combination(s), and the first corresponding relationship includes at least one of: the first link identifier corresponding to one first beam number combination; the first link identifier corresponding to more than one first beam number combination; or the first link identifier corresponding to one first parameter combination.

In some embodiments, the first information may include the first link identifier, in which the first link identifier has the first corresponding relationship with the first beam number combination(s).

For example, the first information sent by the network device includes the first link identifier. The first link identifier has the first corresponding relationship with the first beam number combination(s).

In some embodiments, the first information may include the first link identifier, in which the first link identifier has the first corresponding relationship with the first parameter combination(s).

For example, the first information sent by the network device includes the first link identifier. The first link identifier has the first corresponding relationship with the first parameter combination(s).

In some embodiments, the first information may include the first link identifier, in which the first link identifier has the first corresponding relationship with the first beam number combination(s) and the first parameter combination(s).

For example, the first information sent by the network device includes the first link identifier. The first link identifier has the first corresponding relationship with the first beam number combination(s) and the first parameter combination(s).

In some embodiments, the first corresponding relationship includes the first link identifier corresponding to one first beam number combination.

For example, a first link identifier 1 corresponds to a first beam number combination 1: {2, 2, 2}, and a first link identifier 2 corresponds to a first beam number combination 2: {4, 4, 4}. In a case that the first information includes the first link identifier 1, the UE may determine the first beam number combination 1: {2, 2, 2}; or in a case that the first information includes the first link identifier 2, the UE may determine the first beam number combination 2: {4, 4, 4}.

In some embodiments, the first corresponding relationship includes the first link identifier corresponding to more than one first beam number combination.

For example, a first link identifier 1 corresponds to a first beam number combination 1: {2, 2, 2}, and a first beam number combination 2: {4, 4, 4}. In a case that the first information includes the first link identifier 1, the UE may determine the first beam number combination 1: {2, 2, 2}, and the first beam number combination 2: {4, 4, 4}.

In some embodiments, the first corresponding relationship includes the first link identifier corresponding to one first parameter combination.

For example, a first link identifier 1 corresponds to a first parameter combination 1: {{1/4, 1/4, 1/8, 1/8}, ½}, and a first link identifier 2 corresponds to a first parameter combination 2: {{1/4, 1/4, 1/8, 1/8}, ¼}. In a case that the first information includes the first link identifier 1, the UE may determine the first parameter combination 1: {{1/4, 1/4, 1/8, 1/8}, ½}; or in a case that the first information includes the first link identifier 2, the UE may determine the first parameter combination 2: { {1/4, 1/4, 1/8, 1/8}, ¼}.

In some embodiments, the first corresponding relationship includes the first link identifier corresponding to one first beam number combination and the first link identifier corresponding to one first parameter combination. That is, each first beam number combination corresponds to one first parameter combination.

For example, a first link identifier 1 corresponds to a first beam number combination 1: {2, 2, 2} and a first parameter combination 1: { {1/4, 1/4, 1/8, 1/8}, ½}; and a first link identifier 2 corresponds to a first beam number combination 2: {4, 4, 4} and a first parameter combination 2: {{1/4, 1/4, 1/8, 1/8}, ¼}. In a case that the first information includes the first link identifier 1, the UE may determine the first beam number combination 1: {2, 2, 2} and the first parameter combination 1: {{1/4, 1/4, 1/8, 1/8}, ½); or in a case that the first information includes the first link identifier 2, the UE may determine the first beam number combination 2: {4, 4, 4} and the first parameter combination 2: { {1/4, 1/4, 1/8, 1/8}, ¼}.

In some embodiments, the first corresponding relationship includes the first link identifier corresponding to more than one first beam number combination and the first link identifier corresponding to one first parameter combination. That is, more than one first beam number combination corresponds to one first parameter combination.

For example, a first link identifier 1 corresponds to a first beam number combination 1: {2, 2, 2}, a first beam number combination 2: {4, 4, 4}, and a first parameter combination 1: { { 1/4, 1/4, 1/8, 1/8}, ½}; and a first link identifier 2 corresponds to a first beam number combination 3: {2, 4, 2}, a first beam number combination 4: {2, 2, 4}, and a first parameter combination 2: {{1/4, 1/4, 1/8, 1/8}, ¼}. In a case that the first information includes the first link identifier 1, the UE may determine the first beam number combination 1: {2, 2, 2}, the first beam number combination 2: {4, 4, 4}, and the first parameter combination 1: {{1/4, 1/4, 1/8, 1/8}, ½}; or in a case that the first information includes the first link identifier 2, the UE may determine the first beam number combination 3: {2, 4, 2}, the first beam number combination 4: {2, 2, 4}, and the first parameter combination 2: { {1/4, 1/4, 1/8, 1/8}, ¼}.

It is clear that the first beam number combination and the first parameter combination may establish a corresponding relationship via a link identifier. In this case, only the first link identifier needs to be carried in the first information, and the UE may determine, based on the first link identifier, the first beam number combination(s) and the first parameter combination(s).

In some embodiments, an identifier may be an identity (ID) or an index.

In the present disclosure, by determining, based on a link identifier, a first number of first beam number combinations and at least one corresponding first parameter combination, the UE may report channel state information (CSI) based on the determined first beam number combinations and the corresponding first parameter combination, thereby reducing signaling overhead and improving coherent joint transmission (CJT) performance.

In the method for determining communication parameters provided in the embodiments of the present disclosure, the first information includes a first beam number combination identifier and a first parameter combination identifier.

In some embodiments, the first information may include the first beam number combination identifier and the first parameter combination identifier.

For example, the first information includes at least one first beam number combination identifier and at least one first parameter combination identifier. A first parameter combination indicated by the first parameter combination identifier corresponds to a first beam number combination indicated by the first beam number combination identifier.

In this case, it is not necessary to establish a link between the first beam number combination and the first parameter combination. The UE may separately determine the first beam number combination based on the first beam number combination identifier and determine the first parameter combination based on the first parameter combination identifier.

For example, the first information may include one first beam number combination identifier and one first parameter combination identifier. The UE may determine, based on the one first beam number combination identifier included in the first information, a first beam number combination indicated by the first beam number combination identifier, and the UE may determine, based on the one first parameter combination identifier included in the first information, a first parameter combination indicated by the first parameter combination identifier.

For example, the first information may include more than one first beam number combination identifier and one first parameter combination identifier. For example, the first information may include a first beam number combination identifier 1, a first beam number combination identifier 2, and a first parameter combination identifier 1, so that the UE may determine a first beam number combination 1 based on the first beam number combination identifier 1 included in the first information, determine a first beam number combination 2 based on the first beam number combination identifier 2 included in the first information, and determine a first parameter combination 1 based on the first parameter combination identifier 1 included in the first information. The first beam number combination 1 corresponds to the first parameter combination 1 and the first beam number combination 2 corresponds to the first parameter combination 1.

For example, the first information may include more than one first beam number combination identifier and more than one first parameter combination identifier. For example, the first information may include a first beam number combination identifier 1, a first beam number combination identifier 2, a first parameter combination identifier 1, and a first parameter combination identifier 2, so that the UE may determine a first beam number combination 1 based on the first beam number combination identifier 1 included in the first information, determine a first beam number combination 2 based on the first beam number combination identifier 2 included in the first information, determine a first parameter combination 1 based on the first parameter combination identifier 1 included in the first information, and determine a first parameter combination 2 based on the first parameter combination identifier 2 included in the first information. The first beam number combination 1 corresponds to the first parameter combination 1, and the first beam number combination 2 corresponds to the first parameter combination 2.

In the present disclosure, by determining, based on the first beam number combination identifier and the first parameter combination identifier respectively, a first number of first beam number combinations and at least one corresponding first parameter combination, the UE may report channel state information (CSI) based on the determined first beam number combinations and the corresponding first parameter combination, thereby reducing signaling overhead and improving coherent joint transmission (CJT) performance.

In the method for determining communication parameters provided in the embodiments of the present disclosure, a value of the first number may include at least one of the following: 1; 2; or 4.

In some embodiments, the first number may be 1.

For example, the network device indicates one first SD basis number combination by the first information.

In some embodiments, the first number may be 2.

For example, the network device indicates two first SD basis number combinations by the first information.

In some embodiments, the first number may be 4.

For example, the network device indicates four first SD basis number combinations by the first information.

It is clear that the first number may represent the number of the SD basis number combinations that the UE is capable of supporting to maintain simultaneously.

The present disclosure provides multiple possible cases of the first number, so as to, by receiving first information, determine a first number of first beam number combinations and at least one corresponding first parameter combination, which enables the UE to report channel state information (CSI) based on the determined first beam number combinations and the corresponding first parameter combination, thereby reducing signaling overhead and improving coherent joint transmission (CJT) performance.

In the method for determining communication parameters provided in the embodiments of the present disclosure, FIG. 6 is a flowchart illustrating a method for determining communication parameters according to an embodiment. As shown in FIG. 6, the method may also include the following steps.

In step S51, second information is sent.

In some embodiments, the network device may send the second information.

For example, the network device sends the second information to the UE. The second information may be used to configure at least one second parameter combination corresponding to a second number of second beam number combinations. A second beam number combination is a subset of a first beam number combination, and the second parameter combination includes *P*ᵥ and β.

For example, the second beam number combination may be a subset of the first beam number combination. It is clear that the first beam number combination may be a beam number combination corresponding to N TRPs, and the second beam number combination may be a beam number combination corresponding to TRPs selected either partially or completely by the UE from the N TRPs. It is possible that the UE does not select some of the TRPs. That is to say, the beam number in the first beam number combination is N, and N represents the number of non-zero power (NZP) CSI-RS resources included in one CMR configured by the network device, or N may be understood as the number of TRPs. While the beam number in the second beam number combination may be M, where M is less than or equal to N.

For example, in a case that N is 3, taking Table 1 as an example, the first beam number combination that the network device may configure by the first information may be {2, 4, 2}. The network device may also configure *P*ᵥ and β corresponding to {2, 4, 2} by the first information. For the UE, it may choose 2 TRPs or 1 TRP out of 3 TRPs to provide a service for the UE. In this case, the second beam number combination may be {4, 2}, {2, 4}, {2, 2}, {4}, and/or {2}. It can be seen that the first beam number combination may correspond to more than one second beam number combination.

In some embodiments, the second information may be referred to as second configuration information, second indication information, second parameter combination configuration information, etc. This present disclosure does not limit the name of the second information.

In some embodiments, the second information may be the same as the first information, or may be different from the first information.

For example, the second information and the first information are contained in the same RRC signaling. For example, the second information and the first information are respectively included in different RRC signalings.

In the present disclosure, the at least one second parameter combination corresponding to the second number of the second beam number combinations is determined, which enables the UE to report channel state information (CSI) based on the determined second beam number combinations and the corresponding second parameter combination, thereby reducing signaling overhead and improving coherent joint transmission (CJT) performance.

In the method for determining communication parameters provided in the embodiments of the present disclosure, the second information includes a second link identifier, in which the second link identifier has a second corresponding relationship with the second beam number combination(s) and/or the second parameter combination(s), and the second corresponding relationship includes at least one of: the second link identifier corresponding to one second beam number combination; the second link identifier corresponding to more than one second beam number combination; or the second link identifier corresponding to one second parameter combination.

In some embodiments, the second information may include the second link identifier, in which the second link identifier has the second corresponding relationship with the second beam number combination(s).

For example, the second information sent by the network device includes the second link identifier. The second link identifier has the second corresponding relationship with the second beam number combination(s).

In some embodiments, the second information may include the second link identifier, in which the second link identifier has the second corresponding relationship with the second parameter combination(s).

For example, the second information sent by the network device includes the second link identifier. The second link identifier has the second corresponding relationship with the second parameter combination(s).

In some embodiments, the second information may include the second link identifier, in which the second link identifier has the second corresponding relationship with the second beam number combination(s) and the second parameter combination(s).

For example, the second information sent by the network device includes the second link identifier. The second link identifier has the second corresponding relationship with the second beam number combination(s) and the second parameter combination(s).

In some embodiments, the second corresponding relationship includes the second link identifier corresponding to one second beam number combination.

For example, a second link identifier 1 corresponds to a second beam number combination 1: {2, 2}, and a second link identifier 2 corresponds to a second beam number combination 2: {2, 4}. In a case that the second information includes the second link identifier 1, the UE may determine the second beam number combination 1: {2, 2}; or in a case that the second information includes the second link identifier 2, the UE may determine the second beam number combination 2: {2, 4}.

In some embodiments, the second corresponding relationship includes the second link identifier corresponding to more than one second beam number combination.

For example, a second link identifier 1 corresponds to a second beam number combination 1: {2, 2}, and a second beam number combination 2: {2, 4}. In a case that the second information includes the second link identifier 1, the UE may determine the second beam number combination 1: {2, 2}, and the second beam number combination 2: {2, 4}.

In some embodiments, the second corresponding relationship includes the second link identifier corresponding to one second parameter combination.

For example, a second link identifier 1 corresponds to a second parameter combination 1: { {1/4, 1/4, 1/8, 1/8}, ½}, and a second link identifier 2 corresponds to a second parameter combination 2: {{1/4, 1/4, 1/8, 1/8}, ¼}. In a case that the second information includes the second link identifier 1, the UE may determine the second parameter combination 1: { {1/4, 1/4, 1/8, 1/8}, ½}; or in a case that the second information includes the second link identifier 2, the UE may determine the second parameter combination 2: { { 1/4, 1/4, 1/8, 1/8}, ¼}.

In some embodiments, the second corresponding relationship includes the second link identifier corresponding to one second beam number combination and the second link identifier corresponding to one second parameter combination. That is, each second beam number combination corresponds to one second parameter combination.

For example, a second link identifier 1 corresponds to a second beam number combination 1: {2, 2} and a second parameter combination 1: {{1/4, 1/4, 1/8, 1/8}, ½}; and a second link identifier 2 corresponds to a second beam number combination 2: {2, 4} and a second parameter combination 2: { {1/4, 1/4, 1/8, 1/8}, ¼}. In a case that the second information includes the second link identifier 1, the UE may determine the second beam number combination 1: {2, 2} and the second parameter combination 1: {{1/4, 1/4, 1/8, 1/8}, ½} ; or in a case that the second information includes the second link identifier 2, the UE may determine the second beam number combination 2: {2, 4} and the second parameter combination 2: { {1/4, 1/4, 1/8, 1/8}, ¼}.

In some embodiments, the second corresponding relationship includes the second link identifier corresponding to more than one second beam number combination and the second link identifier corresponding to one second parameter combination. That is, more than one second beam number combination corresponds to one second parameter combination.

For example, a second link identifier 1 corresponds to a second beam number combination 1: {2, 2}, a second beam number combination 2: {2, 4}, and a second parameter combination 1: { {1/4, 1/4, 1/8, 1/8}, ½}; and a second link identifier 2 corresponds to a second beam number combination 3: {2}, a second beam number combination 4: {4}, and a second parameter combination 2: { {1/4, 1/4, 1/8, 1/8}, ¼}. In a case that the second information includes the second link identifier 1, the UE may determine the second beam number combination 1: {2, 2}, the second beam number combination 2: {2, 4}, and the second parameter combination 1: {{1/4, 1/4, 1/8, 1/8}, ½} ; or in a case that the second information includes the second link identifier 2, the UE may determine the second beam number combination 3: {2}, the second beam number combination 4: {4}, and the second parameter combination 2: { {1/4, 1/4, 1/8, 1/8}, ¼}.

It is clear that the second beam number combination and the second parameter combination may establish a corresponding relationship via a link identifier. In this case, only the second link identifier needs to be carried in the second information, and the UE may determine, based on the second link identifier, the second beam number combination(s) and the second parameter combination(s).

In some embodiments, an identifier may be an identity (ID) or an index.

In the present disclosure, by determining, based on a link identifier, a second number of second beam number combinations and at least one corresponding second parameter combination, the UE may report channel state information (CSI) based on the determined second beam number combinations and the corresponding second parameter combination, thereby reducing signaling overhead and improving coherent joint transmission (CJT) performance.

In the method for determining communication parameters provided in the embodiments of the present disclosure, the second information includes a second beam number combination identifier and a second parameter combination identifier; or the second information includes a second parameter combination identifier.

In some embodiments, the second information may include the second parameter combination identifier.

For example, the second parameter combination identifier included in the second information may be used for the UE to determine the second parameter combination, such as determining one second parameter combination. In this case, it may be considered that the one second parameter combination determined by the UE is used for one or more second beam number combinations. That is, it may be considered that one or more second beam number combinations determined by the UE correspond to the same one second parameter combination, i.e. corresponding to the second parameter combination indicated by the second parameter combination identifier.

In some embodiments, the second information includes a second beam number combination identifier and a second parameter combination identifier.

For example, the second information includes at least one second beam number combination identifier and at least one second parameter combination identifier. A second parameter combination indicated by the second parameter combination identifier corresponds to a second beam number combination indicated by the second beam number combination identifier.

In this case, it is not necessary to establish a link between the second beam number combination and the second parameter combination. The UE may separately determine the second beam number combination based on the second beam number combination identifier and determine the second parameter combination based on the second parameter combination identifier.

In the present disclosure, by determining, based on the second beam number combination identifier and the second parameter combination identifier respectively, a second number of second beam number combinations and at least one corresponding second parameter combination, the UE may report channel state information (CSI) based on the determined second beam number combinations and the corresponding second parameter combination, thereby reducing signaling overhead and improving coherent joint transmission (CJT) performance.

In the method for determining communication parameters provided in the embodiments of the present disclosure, the second parameter combination is the same as the first parameter combination.

In some embodiments, a second parameter combination corresponding to the second beam number combination may be the same as a first parameter combination corresponding to the first beam number combination.

For example, *P*ᵥ and β corresponding to the second beam number combination are the same as *P*ᵥ and β corresponding to the first beam number combination. In other words, the UE may take *P*ᵥ and β corresponding to the first beam number combination as *P*ᵥ and β corresponding to the second beam number combination.

The present disclosure provides a manner for determining the second parameter combination, which enables the UE to report channel state information (CSI) based on the determined second beam number combinations and the corresponding second parameter combination, thereby reducing signaling overhead and improving coherent joint transmission (CJT) performance.

It should be noted that persons skilled in the art may understand that the various embodiments mentioned above in this present disclosure may be used in conjunction with the above-mentioned embodiments or may be used independently. Regardless of whether used alone or in conjunction with the aforementioned embodiments, the implementation principles are similar. Some embodiments of the present disclosure are illustrated by using the implementations that are used together. Of course, those skilled in the art may understand that such examples are not limitations of the embodiments of the present disclosure.

Based on the same idea, the embodiments of the present disclosure also provide an apparatus for determining communication parameters.

It is understood that, in order to achieve the above functions, the apparatus and the device for determining communication parameters provided by the embodiments of the present disclosure contain the corresponding hardware architectures and/or software modules that perform respective functions. In combination with the units and algorithmic steps of each example disclosed in the embodiments of the present disclosure, the embodiments of the present disclosure may be implemented in hardware or in a combination of hardware and computer software. Whether a function is performed in hardware or computer software driving hardware depends on the specific application and design constraints of the technical solution. A person skilled in the art may use a different method for each particular application to achieve the described function, but such implementation should not be considered to be outside the scope of the technical scheme of the embodiments of the present disclosure.

FIG. 7 is a schematic diagram of an apparatus for determining communication parameters according to an embodiment. Referring to FIG. 7, the apparatus 200 includes: a receiving module 201, configured to receive first information; and a processing module, configured to determine, based on the first information, a first number of first beam number combinations and at least one first parameter combination corresponding to the first number of first beam number combinations, in which the first parameter combination includes a frequency domain vector parameter *P*ᵥ and a non-zero coefficient parameter β.

In the present disclosure, by receiving first information to determine a first number of first beam number combinations and at least one corresponding first parameter combination, the UE may report channel state information (CSI) based on the determined first beam number combinations and the corresponding first parameter combination, thereby reducing signaling overhead and improving coherent joint transmission (CJT) performance.

In some embodiments, the first information includes a first link identifier, in which the first link identifier has a first corresponding relationship with the first number of first beam number combinations and/or the at least one first parameter combination, and the first corresponding relationship includes at least one of: the first link identifier corresponding to one first beam number combination; the first link identifier corresponding to more than one first beam number combination; or the first link identifier corresponding to one first parameter combination.

In the present disclosure, by determining, based on a link identifier, a first number of first beam number combinations and at least one corresponding first parameter combination, the UE may report channel state information (CSI) based on the determined first beam number combinations and the corresponding first parameter combination, thereby reducing signaling overhead and improving coherent joint transmission (CJT) performance.

In some embodiments, the first information includes a first beam number combination identifier and a first parameter combination identifier.

In the present disclosure, by determining, based on the first beam number combination identifier and the first parameter combination identifier respectively, a first number of first beam number combinations and at least one corresponding first parameter combination, the UE may report channel state information (CSI) based on the determined first beam number combinations and its corresponding first parameter combination, thereby reducing signaling overhead and improving coherent joint transmission (CJT) performance.

In some embodiments, a value of the first number may include at least one of the following: 1; 2; or 4.

The present disclosure provides multiple possible cases of the first number, so as to, by receiving first information, determine a first number of first beam number combinations and at least one corresponding first parameter combination, which enables the UE to report channel state information (CSI) based on the determined first beam number combinations and the corresponding first parameter combination, thereby reducing signaling overhead and improving coherent joint transmission (CJT) performance.

In some embodiments, the apparatus 200 further includes: a processing module 202, configured to determine a second number of second beam number combinations and at least one second parameter combination corresponding to the second number of second beam number combinations, in which a second beam number combination is a subset of a first beam number combination and the second parameter combination includes the *P*ᵥ and the β.

In the present disclosure, the second beam number combination belonging to a subset of the first beam number combination and at least one corresponding second parameter combination are determined, which enables the UE to report channel state information (CSI) based on the determined second beam number combinations and the corresponding second parameter combination, thereby reducing signaling overhead and improving coherent joint transmission (CJT) performance.

In some embodiments, the receiving module 201 is further configured to receive second information; and the processing module 202 is further configured to determine, based on the second information, the at least one second parameter combination corresponding to the second number of second beam number combinations.

In the present disclosure, the at least one second parameter combination corresponding to the second number of the second beam number combinations is determined, which enables the UE to report channel state information (CSI) based on the determined second beam number combinations and the corresponding second parameter combination, thereby reducing signaling overhead and improving coherent joint transmission (CJT) performance.

In some embodiments, the second information includes a second link identifier, in which the second link identifier has a second corresponding relationship with the second number of second beam number combinations and/or the at least one second parameter combination, and the second corresponding relationship includes at least one of: the second link identifier corresponding to one second beam number combination; the second link identifier corresponding to more than one second beam number combination; or the second link identifier corresponding to one second parameter combination.

In the present disclosure, by determining, based on a link identifier, a second number of second beam number combinations and at least one corresponding second parameter combination, the UE may report channel state information (CSI) based on the determined second beam number combinations and the corresponding second parameter combination, thereby reducing signaling overhead and improving coherent joint transmission (CJT) performance.

In some embodiments, the second information includes a second beam number combination identifier and a second parameter combination identifier; or the second information includes a second parameter combination identifier.

In the present disclosure, by determining, based on the second beam number combination identifier and the second parameter combination identifier respectively, a second number of second beam number combinations and at least one corresponding second parameter combination, the UE may report channel state information (CSI) based on the determined second beam number combinations and the corresponding second parameter combination, thereby reducing signaling overhead and improving coherent joint transmission (CJT) performance.

In some embodiments, the second parameter combination is the same as the first parameter combination.

The present disclosure provides a manner for determining the second parameter combination, which enables the UE to report channel state information (CSI) based on the determined second beam number combinations and the corresponding second parameter combination, thereby reducing signaling overhead and improving coherent joint transmission (CJT) performance.

FIG. 8 is a schematic diagram of an apparatus for determining communication parameters according to an embodiment. Referring to FIG. 8, the apparatus 300 includes: a sending module 301, configured to send first information, in which the first information is used to instruct a user equipment (UE) to determine a first number of first beam number combinations and at least one first parameter combination corresponding to the first number of first beam number combinations, in which the first parameter combination includes a frequency domain vector parameter *P*ᵥ and a non-zero coefficient parameter β.

In the present disclosure, by receiving first information to determine a first number of first beam number combinations and at least one corresponding first parameter combination, the UE may report channel state information (CSI) based on the determined first beam number combinations and the corresponding first parameter combination, thereby reducing signaling overhead and improving coherent joint transmission (CJT) performance.

In some embodiments, the first information includes a first link identifier, in which the first link identifier has a first corresponding relationship with the first number of first beam number combinations and/or the at least one first parameter combination, and the first corresponding relationship includes at least one of: the first link identifier corresponding to one first beam number combination; the first link identifier corresponding to more than one first beam number combination; or the first link identifier corresponding to one first parameter combination.

In the present disclosure, by determining, based on a link identifier, a first number of first beam number combinations and at least one corresponding first parameter combination, the UE may report channel state information (CSI) based on the determined first beam number combinations and the corresponding first parameter combination, thereby reducing signaling overhead and improving coherent joint transmission (CJT) performance.

In some embodiments, the first information includes a first beam number combination identifier and a first parameter combination identifier.

In the present disclosure, by determining, based on the first beam number combination identifier and the first parameter combination identifier respectively, a first number of first beam number combinations and at least one corresponding first parameter combination, the UE may report channel state information (CSI) based on the determined first beam number combinations and the corresponding first parameter combination, thereby reducing signaling overhead and improving coherent joint transmission (CJT) performance.

In some embodiments, a value of the first number may include at least one of the following: 1; 2; or 4.

The present disclosure provides multiple possible cases of the first number, so as to, by receiving first information, determine a first number of first beam number combinations and at least one corresponding first parameter combination. The UE may report channel state information (CSI) based on the determined first beam number combinations and the corresponding first parameter combination, thereby reducing signaling overhead and improving coherent joint transmission (CJT) performance.

In some embodiments, the sending module 301 is further configured to send second information, in which the second information is used to instruct the UE to determine at least one second parameter combination corresponding to a second number of second beam number combinations, in which a second beam number combination is a subset of a first beam number combination and the second parameter combination includes the *P*ᵥ and the β.

In the present disclosure, the at least one second parameter combination corresponding to the second number of the second beam number combinations is determined, which enables the UE to report channel state information (CSI) based on the determined second beam number combinations and the corresponding second parameter combination, thereby reducing signaling overhead and improving coherent joint transmission (CJT) performance.

In some embodiments, the second information includes a second link identifier, in which the second link identifier has a second corresponding relationship with the second number of second beam number combinations and/or the at least one second parameter combination, and the second corresponding relationship includes at least one of: the second link identifier corresponding to one second beam number combination; the second link identifier corresponding to more than one second beam number combination; or the second link identifier corresponding to one second parameter combination.

In the present disclosure, by determining, based on a link identifier, a second number of second beam number combinations and at least one corresponding second parameter combination, the UE may report channel state information (CSI) based on the determined second beam number combinations and the corresponding second parameter combination, thereby reducing signaling overhead and improving coherent joint transmission (CJT) performance.

In some embodiments, the second information includes a second beam number combination identifier and a second parameter combination identifier; or the second information includes a second parameter combination identifier.

In the present disclosure, by determining, based on the second beam number combination identifier and the second parameter combination identifier respectively, a second number of second beam number combinations and at least one corresponding second parameter combination, the UE may report channel state information (CSI) based on the determined second beam number combinations and the corresponding second parameter combination, thereby reducing signaling overhead and improving coherent joint transmission (CJT) performance.

In some embodiments, the second parameter combination is the same as the first parameter combination.

The present disclosure provides a manner for determining the second parameter combination, which enables the UE to report channel state information (CSI) based on the determined second beam number combinations and the corresponding second parameter combination, thereby reducing signaling overhead and improving coherent joint transmission (CJT) performance.

It is understandable that the aforementioned apparatus 200 may also include a sending module, and the apparatus 300 may also include a receiving module, a processing module, etc. That is to say, the aforementioned apparatus 200 and apparatus 300 may also include any modules that may be necessary, and this disclosure does not make any limitations.

With respect to the apparatuses in the above embodiments, the specific manner in which each module performs an operation has been described in detail in the embodiments of the method and will not be elaborated here.

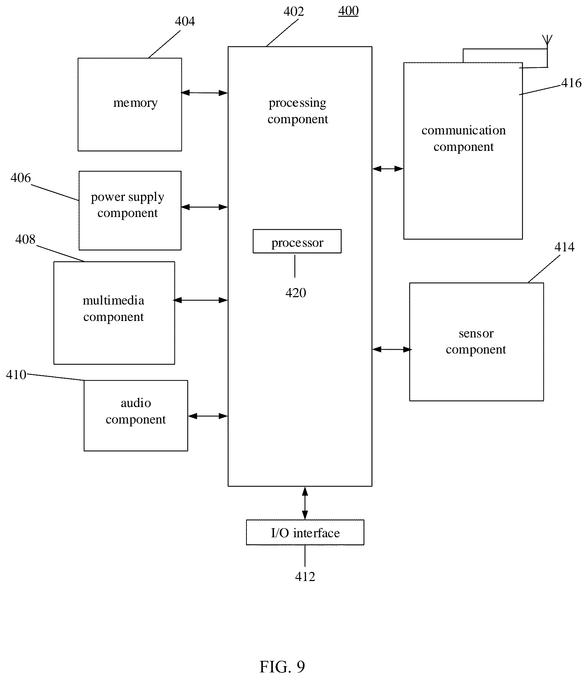

FIG. 9 is a schematic diagram illustrating a device for determining communication parameters according to an embodiment. For example, the device 400 may be a mobile phone, a computer, a digital broadcast terminal, a messaging device, a game console, a tablet device, a medical device, a fitness device, a personal digital assistant, etc.

Referring to FIG. 9, the device 400 may include one or more of: a processing component 402, a memory 404, a power supply component 406, a multimedia component 408, an audio component 410, an input/output (I/O) interface 412, and a sensor component 414, and a communication component 416.

The processing component 402 generally controls the overall operations of the device 400, such as operations associated with display, phone calls, data communications, camera operations, and recording operations. The processing component 402 may include one or more processors 420 to execute instructions to complete all or part of the steps of the above method. Additionally, the processing component 402 may include one or more modules that facilitate interaction between processing component 402 and other components. For example, the processing component 402 may include a multimedia module to facilitate interaction between the multimedia component 408 and the processing component 402.

The memory 404 is configured to store various types of data to support operations at the device 400. Examples of such data include instructions for any application or method operating on the device 400, contact data, phonebook data, messages, pictures, videos, etc. The memory 404 may be implemented by any type of volatile or non-volatile storage device, or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 406 provides power to various components of the device 400. The power supply component 406 may include a power management system, one or more power supplies, and other components associated with generating, managing, and distributing power to the device 400.

The multimedia component 408 includes a screen that provides an output interface between the device 400 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundary of a touch or slide action, but also detect the duration and pressure associated with the touch or slide action. In some embodiments, the multimedia component 408 includes a front-facing camera and/or a rear-facing camera. When the device 400 is in an operating mode, such as a shooting mode or a video mode, the front camera and/or the rear camera may receive external multimedia data. Each front-facing camera and rear-facing camera may be a fixed optical lens system or have a focal length and optical zoom capabilities.

The audio component 410 is configured to output and/or input an audio signal. For example, the audio component 410 includes a microphone (MIC) configured to receive the external audio signal when the device 400 is in an operating mode, such as a call mode, a recording mode, and a speech recognition mode. The received audio signal may be further stored in the memory 404 or sent via the communication component 416. In some embodiments, the audio component 410 also includes a speaker for outputting audio signals.

The I/O interface 412 provides an interface between the processing component 402 and a peripheral interface module. The peripheral interface module may be a keyboard, a click wheel, a button, etc. The button may include, but is not limited to: a home button, a volume button, a start button, and a lock button.

The sensor component 414 includes one or more sensors that provide various aspects of status assessment for the device 400. For example, the sensor component 414 may detect the open/closed state of the device 400, the relative positioning of components, such as a display and a keypad of the device 400, the sensor component 414 may also detect a position change of the device 400 or a component of the device 400, presence or absence of user contact with the device 400, an orientation or an acceleration/deceleration of the device 400, and a temperature change of the device 400. The sensor component 414 may include a proximity sensor configured to detect presence of nearby objects without any physical contact. The sensor component 414 may also include a light sensor, such as a CMOS or CCD image sensor, for use in imaging applications. In some embodiments, the sensor component 414 may also include an acceleration sensor, a gyroscope sensor, a magnetic sensor, a pressure sensor, or a temperature sensor.

The communication component 416 is configured to facilitate wired or wireless communication between the device 400 and other devices. The device 400 may access a wireless network based on a communication standard, such as WiFi, 2G, or 3G, or their combination. In an exemplary embodiment, the communication component 416 receives a broadcast signal or broadcast related information from an external broadcast management system via a broadcast channel. In an exemplary embodiment, the communication component 416 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an exemplary embodiment, the device 400 may be configured by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components used to perform the above methods.

In an exemplary embodiment, a non-temporary computer-readable storage medium including instructions is also provided, such as the memory 404 including instructions that may be executed by a processor 420 of the device 400 to accomplish the method described above. For example, the non-temporary computer readable storage media may be ROM, random access memory (RAM), CD-ROM, magnetic tape, floppy disk, and optical data storage device.

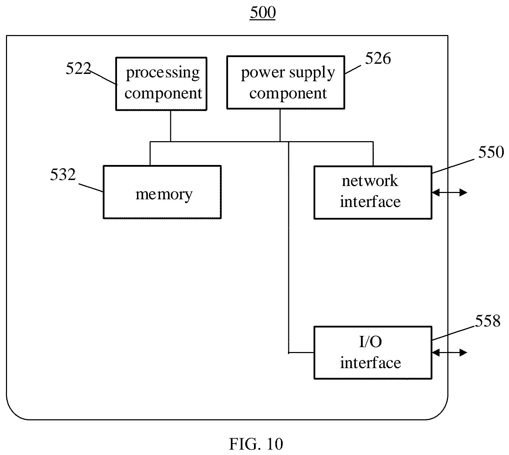

FIG. 10 is a schematic diagram illustrating a device for determining communication parameters according to an embodiment. For example, the device 500 may be provided as a base station or a server. Referring to FIG. 10, the device 500 includes a processing component 522, which further includes at least one processor, and a memory resource represented by a memory 532 for storing instructions executable by the processing component 522, such as an application. The application stored in the memory 532 may include one or more modules, each of which corresponds to a set of instructions. In addition, the processing component 522 is configured to execute instructions to perform any method of the aforementioned methods performed by the network device.

The device 500 may further include a power supply component 526 configured to perform power management of the device 500, a wired or wireless network interface 550 configured to connect the device 500 to a network, and an input/output (I/O) interface 558. The device 500 may operate based on an operating system stored in the memory 532, such as Windows Server^{™}, Mac OS X^{™} Unix^{™}, Linux^{™}, FreeBSD^{™} or the like.

In the present disclosure, in a case that the UE and more than one TRP or more than one remote radio head (RRH) are in service, the SD basis number combination and the combination of the FD basis number combination, i.e. *P*ᵥ and β are configured and determined, thereby reducing signaling overhead and improving CJT performance.

It is further understood that "multiple" in the present disclosure means two or more, and other quantifiers are similar. "And/or" describes the association relationship of the associated object, indicating that there may be three kinds of relationships, for example, A and/or B, may be: A exists alone, A and B exist simultaneously, and B exists alone. The character "/" generally indicates that the associated object is an "or" relationship. The singular forms of "a", "said" and "that" are also intended to include the majority form, unless the context clearly indicates otherwise.

It is further understood that the terms "first", "second", etc. are used to describe various types of information, but that information should not be limited to these terms. These terms are used only to distinguish the same type of information from one to another and do not indicate a particular order or degree of importance. In fact, expressions such as "first" and "second" are used interchangeably. For example, without leaving the scope of the present disclosure, the first information may also be referred to as the second information, and similarly, the second information may also be referred to as the first information.

It is further understood that the meaning of the words "in response to" and "if" as referred to in the present disclosure depends on the context and the actual situation in which they are used, such as the words "in response to" as used herein can be interpreted as "when" or "in a case that" or "if".

It is further understood that in the embodiments of the present disclosure, although the operations are described in a particular order in the attached drawings, it should not be construed as requiring that the operations be performed in a particular or serial order as shown, or that the operations shown be performed in their entirety to obtain the desired result. In certain environments, multitasking and parallel processing may be advantageous.

Other embodiments of the disclosure will be apparent to those skilled in the art from consideration of the specification and practice of the disclosure disclosed here. This disclosure is intended to cover any variations, uses, or adaptations of the disclosure following the general principles thereof and including such departures from the disclosure as come within known or customary practice in the art.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for determining communication parameters, performed by a user equipment (UE), comprising:
receiving first information; and
determining, based on the first information, a first number of first beam number combinations and at least one first parameter combination corresponding to the first number of first beam number combinations, wherein the first parameter combination comprises a frequency domain vector parameter *P*ᵥ and a non-zero coefficient parameter β.

2. The method according to claim 1, wherein the first information comprises a first link identifier, wherein the first link identifier has a first corresponding relationship with the first number of first beam number combinations and/or the at least one first parameter combination, and
the first corresponding relationship comprises at least one of:
the first link identifier corresponding to one first beam number combination;
the first link identifier corresponding to more than one first beam number combination; or
the first link identifier corresponding to one first parameter combination.

3. The method according to claim 1, wherein the first information comprises a first beam number combination identifier and a first parameter combination identifier.

4. The method according to any one of claims 1 to 3, further comprising:
determining a second number of second beam number combinations and at least one second parameter combination corresponding to the second number of second beam number combinations, wherein a second beam number combination is a subset of a first beam number combination and the second parameter combination comprises the P and the β.

5. The method according to claim 4, further comprising:
receiving second information; and
determining, based on the second information, the at least one second parameter combination corresponding to the second number of second beam number combinations.

6. The method according to claim 5, wherein the second information comprises a second link identifier, wherein the second link identifier has a second corresponding relationship with the second number of second beam number combinations and/or the at least one second parameter combination, and
the second corresponding relationship comprises at least one of:
the second link identifier corresponding to one second beam number combination;
the second link identifier corresponding to more than one second beam number combination; or
the second link identifier corresponding to one second parameter combination.

7. The method according to claim 5, wherein the second information comprises a second beam number combination identifier and a second parameter combination identifier; or the second information comprises a second parameter combination identifier.

8. The method according to claim 4, wherein the second parameter combination is the same as the first parameter combination.

9. A method for determining communication parameters, performed by a network device, comprising:
sending first information, wherein the first information is used to instruct a user equipment (UE) to determine a first number of first beam number combinations and at least one first parameter combination corresponding to the first number of first beam number combinations, wherein the first parameter combination comprises a frequency domain vector parameter *P*ᵥ and a non-zero coefficient parameter β.

10. The method according to claim 9, wherein the first information comprises a first link identifier, wherein the first link identifier has a first corresponding relationship with the first number of first beam number combinations and/or the at least one first parameter combination, and
the first corresponding relationship comprises at least one of:
the first link identifier corresponding to one first beam number combination;
the first link identifier corresponding to more than one first beam number combination; or
the first link identifier corresponding to one first parameter combination.

11. The method according to claim 9, wherein the first information comprises a first beam number combination identifier and a first parameter combination identifier.

12. The method according to any one of claims 9 to 11, further comprising:
sending second information, wherein the second information is used to instruct the UE to determine at least one second parameter combination corresponding to a second number of second beam number combinations, wherein a second beam number combination is a subset of a first beam number combination and the second parameter combination comprises the P and the β.

13. The method according to claim 12, wherein the second information comprises a second link identifier, wherein the second link identifier has a second corresponding relationship with the second number of second beam number combinations and/or the at least one second parameter combination, and
the second corresponding relationship comprises at least one of:
the second link identifier corresponding to one second beam number combination;
the second link identifier corresponding to more than one second beam number combination; or
the second link identifier corresponding to one second parameter combination.

14. The method according to claim 12, wherein the second information comprises a second beam number combination identifier and a second parameter combination identifier; or the second information comprises a second parameter combination identifier.

15. The method according to claim 12, wherein the second parameter combination is the same as the first parameter combination.

16. An apparatus for determining communication parameters, comprising:
a receiving module, configured to receive first information; and
a processing module, configured to determine, based on the first information, a first number of first beam number combinations and at least one first parameter combination corresponding to the first number of first beam number combinations, wherein the first parameter combination comprises a frequency domain vector parameter P and a non-zero coefficient parameter β.

17. An apparatus for determining communication parameters, comprising:
a sending module, configured to send first information, wherein the first information is used to instruct a user equipment (UE) to determine a first number of first beam number combinations and at least one first parameter combination corresponding to the first number of first beam number combinations, wherein the first parameter combination comprises a frequency domain vector parameter *P*ᵥ and a non-zero coefficient parameter β.

18. A device for determining communication parameters, comprising:
a processor;
a memory used to store executable instructions of the processor;
wherein the processor is configured to perform the method as claimed in any one of claims 1 to 8.

19. A device for determining communication parameters, comprising:
a processor;
a memory used to store executable instructions of the processor;
wherein the processor is configured to perform the method as claimed in any one of claims 9 to 15.

20. A non-transitory computer-readable storage medium, wherein when instructions in the storage medium are executed by a processor of a user equipment (UE), the UE performs the method as claimed in any one of claims 1 to 9; or when instructions in the storage medium are executed by a processor of a network device, the network device performs the method as claimed in any one of claims 10 to 17.
